# NEUE EUROPÄISCHE PATENTSCHRIFT

(11) **EP 2 147 772 B2**
(45) Veröffentlichungstag und Bekanntmachung des Hinweises auf die Entscheidung über den Einspruch: **25.12.2013**
(45) Hinweis auf die Patenterteilung: 16.03.2011
(21) Anmeldenummer: 09013838.9
(22) Anmeldetag: 16.12.2006
(51) Int. Cl.: B29C 65/60, B29C 65/00, B29C 37/00, B29C 69/00, B29C 49/04, B29C 49/00, B29C 51/00, B29C 51/12, B29C 51/26, B29C 65/02, B60K 15/03, B29C 49/20

(54) **Kunststoff-Hohlkörper**
Plastic hollow body
Corps creux en plastique

(30) Priorität: 10.02.2006 DE 102006006469
(43) Veröffentlichungstag der Anmeldung: 27.01.2010
(62) Teilanmeldung aus: 06829678.9
(73) Patentinhaber: Kautex Textron GmbH & Co. KG, 53229 Bonn (DE)
(72) Erfinder: Bienhüls, Deniz, 53578 Windhagen (DE); Borchert, Matthias, 53179 Bonn (DE); Eulitz, Dirk, 53115 Bonn (DE); Gebert, Klaus, 47877 Willich (DE); Kraemer, Timo, 57632 Rott (DE); Lorenz, Harald, 53474 Bad Neuenahr-Ahrweiler (DE); Löwer, Robert, 85049 Ingolstadt (DE); Mehren, Christoph, 53639 Königswinter (DE); Wolter, Gerd, 53639 Königswinter (DE)
(74) Vertreter: polypatent

(56) Entgegenhaltungen:
- EP-A- 0 103 832
- EP-A- 0 306 643
- EP-A- 1 484 173
- WO-A1-2006/008308
- US-A- 2 300 594
- US-A- 3 458 618
- US-A- 5 308 427
- US-A- 5 445 783
- US-A1- 2005 284 872
- US-B1- 6 338 420

## Beschreibung

Die Erfindung betrifft einen Kunststoff-Hohlkörper nach Oberbegriff von Anspruch 1.

Zur Herstellung von Hohlkörpern aus thermoplastischem Material sind verschiedenste Herstellungsverfahren bekannt, beispielsweise Extrusionsblasformen, Tiefziehen oder Spritzgießen. Beim Extrusionsblasformverfahren kann der Hohlkörper beispielsweise aus einem einzigen schlauchförmigen Vorformling nahtlos hergestellt worden sein. Es besteht allerdings auch die Möglichkeit, einen schlauchförmigen Vorformling der Länge nach in Bahnen aufzuteilen, die Bahnen separat in ein zwei- oder mehrteiliges Werkzeug einzulegen und innerhalb des Werkzeugs mittels Unterdruck oder durch Gasdruckbeaufschlagung aufzuweiten bzw. umzuformen.

Insbesondere bei der Herstellung von technischen Bauteilen wie Kraftstoffbehältern, die in der zuvor beschriebenen Art und Weise ein- oder mehrteilig aus thermoplastischem Kunststoff hergestellt werden, ist es erforderlich, diverse Einbauteile oder Anbauteile an dem Hohlkörper zu befestigen. Dies kann in der ersten Hitze beim Herstellungsvorgang oder auch nachträglich erfolgen. Soll der Hohlkörper die Einbauteile in seinem Inneren aufnehmen, ist es oftmals aufgrund der Größe der Einbauteile erforderlich, diese bei der Herstellung des Hohlkörper in diesen einzubringen. Die ein- oder anzubringenden Ein- und Anbauteile können mit dem Hohlkörper verklippst oder verschweißt werden, wobei das Verschweißen bei der Herstellung des Hohlkörpers in der ersten Hitze oder nachträglich in der zweiten Hitze, beispielsweise durch Reibschweißen oder Spiegelschweißen, erfolgen kann.

Den formschlüssigen Verankerungen eines Einbauteils im Inneren des Hohlkörpers sind oftmals durch dessen Herstellungsverfahren Grenzen gesetzt Beispielsweise ist es bei Herstellung von Hohlkörpern im Extrusionsblasformverfahren nur eingeschränkt möglich, in der Kontur des Hohlkörpers Hinterschneidungen vorzusehen, die eine formschlüssige Verriegelung von Einbauten mit der Wandung des Hohlkörpers ermöglichen. Aus diesem Grund wird häufig auf die Verschweißung als Verbindungstechnik zurückgegriffen.

Das Verschweißen der Bauteile miteinander ist jedoch mit dem Nachteil behaftet, dass die zu verbindenden Kunststoffe eine miteinander verschweißbare Materialpaarung bilden müssen. Hierdurch ist die Auswahl der Ein- oder Anbauteile für den Hohlkörper beschränkt.

Beispielsweise bei der Herstellung von Kraftstoffbehältern aus Kunststoff kann dies eine weitreichende Einschränkung darstellen, da bestimmte Kunststoffe in Anwesenheit von Kraftstoff Quellen bzw. für Kohlenwasserstoffe permeabel sind. Für bestimmte Leitungen und Ventile ist daher eine Materialauswahl erforderlich, die die Möglichkeit des Verschweißens mit dem Behälter bzw. mit dem Hohlkörper von vorneherein ausschließt.

Ein Kunststoff-Hohlkörper nach Oberbegriff von Anspruch 1 ist beispielsweise aus der EP 0 103 832 und US-A-2005 284872 bekannt. Dort wird ein Beruhigungstopf eines Kraftstoffbehälters bei dessen Herstellung durch Extrusionsblasformen mittels eines Haltedoms gegen den noch plastischen Vorformling gepresst. Die im Wesentlichen ebene Verbindungsfläche des Beruhigungstopfs ist mit einer umlaufenden hinterschnittenen Ringnut versehen, über die eine formschlüssige Verankerung des Beruhigungstopfes mit der späteren Behälterwandung erzielt wird. Die Geometrie des Beruhigungstopfs im Bereich der Verbindung mit der Behälterwand ist so beschaffen, dass erhebliche Andruckkräfte benötigt werden, um eine sichere Verankerung des Beruhigungstopfs zu erreichen. Darüber hinaus ist die Geometrie der im Boden des Beruhigungstopfs vorgesehenen Nut so gewählt, dass der Beruhigungsbehälter theoretisch unter plastischer Deformation des mit diesem gebildeten Kunststoffkragens von der Behälterwandung abgezogen werden kann.

Eine Verbindung zweier Kunststoffteile, bei welcher ein Kunststoffteil das als Aufnahme dienende Kunststoffteil zumindest teilweise durch eine Bohrung desselben durchsetzt ist beispielsweise aus der EP 1 484 173 bekannt. Das Material des anzubringenden Kunststoffteils oder der anzubringenden Kunststoffbahn wird mittels Vakuum im schmelzeheißen Zustand durch die entsprechende Öffnung eingezogen und mittels eines Werkzeugs zu einem Nietkopf umgeformt.

Der Erfindung liegt die Aufgabe zugrunde, einen Kunststoff-Hohlkörper mit einem Ein- oder Anbauteil bereitzustellen, das bei der Herstellung des Hohlkörpers mit diesem verbunden wurde, wobei die Verbindung so ausgestaltet sein soll, dass eine besonders sichere und einfache formschlüssige Verankerung gewährleistet ist.

Die Aufgabe wird gelöst durch die Merkmale des Anspruchs 1, vorteilhafte Ausgestaltungen sind den Unteransprüchen zu entnehmen.

Die Durchtrittsöffnung ist zweckmäßigerweise als kreisrunde Bohrung ausgebildet. Alternativ kann die Durchtrittsöffnung profiliert sein, was insbesondere dann von Vorteil ist, wenn das Einbauteil nur eine Durchtrittsöffnung aufweist und eine eindeutige Orientierung des Einbauteils in Bezug auf die Wandung des Hohlkörpers gewünscht ist. Vorzugsweise bildet der die Durchtrittsöffnung durchsetzende Kunststoff in dem Einbau- oder Anbauteile einen verbreiterten Kopf aus, der die formschlüssige Verankerung beider Bauteile bewirkt.

Gemäß der Erfindung ist vorgesehen, dass das Einbauteil wenigstens ein Fußelement aufweist, welches eine abgesetzte oder abgestufte Kontaktfläche mit der Wandung des Hohlkörpers bildet. Auf diese Art und Weise wird bei gleichbleibender Presskraft die Flächenpressung auf die Wandung des Hohlkörpers im Bereich der Kontaktfläche erhöht. Das oder die Fußelemente erzeugen eine stempelartige Wirkung, die das Fließen des thermoplastischen Materials der Wandung des Hohlkörpers in die Durchtrittsöffnung verstärkt. Die Durchtrittsöffnung durchsetzt zweckmäßigerweise die Kontaktfläche des Fußelements.

Bei dem Kunststoff-Hohlkörper gemäß der Erfindung ist vorgesehen, dass die Kontaktfläche des Fußelements konkav oder konisch ausgebildet ist und dass die Durchtrittsöffnung etwa die tiefste Stellung der Muldung bildet, wodurch die Fließbewegung des Kunststoffs der Wandung des Hohlkörpers durch und hinter die Durchtrittsöffnung positiv beeinflusst wird.

Bei einer weiteren zweckmäßigen Ausgestaltung des Kunststoffhohlkörpers ist vorgesehen, dass die Durchtrittsöffnung an ihrem der Wandung des Hohlkörpers abgewandten Ende hinterschnitten ist. Die Hinterschneidung bildet das Wiederlager für den verbreiterten Kopf des erkalteten Schmelzezapfens.

Wenn der Kunststoff-Hohlkörper gemäß der Erfindung beispielsweise als Kraftstoffbehälter ausgebildet ist, so können Einbauteile des Kraftstoffbehälters mit mehreren Fußelementen in der zuvor beschriebenen Art und Weise ausgestattet sein. Durch Erhöhung der Anzahl und Verteilung der Verbindungsstellen lässt sich somit eine für jeden Betriebszustand des Kraftfahrzeugs sichere Verbindung bzw. Verankerung der Einbauteile in dem Inneren des Kraftstoffbehälters erzielen.

Die Erfindung wird nachstehend anhand eines in den Zeichnungen dargestellten Ausführungsbeispiels erläutert.

Es zeigen:
- Figuren 1 und 2:: eine schematische Ansicht der Verbindung eines Einbauteils mit der Wandung des Hohlkörpers und
- Figuren 3 bis 12:: eine schematische Darstellung des Herstellungsverfahrens eines Kraftstoffbehälters aus Kunststoff gemäß der Erfindung.

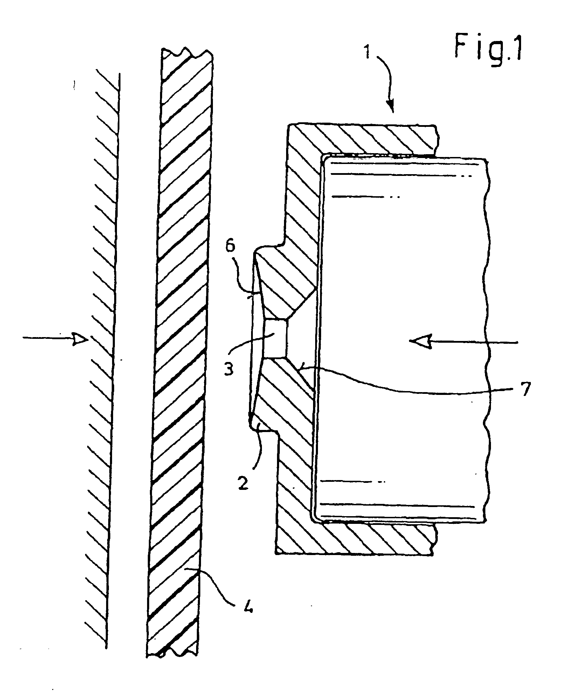

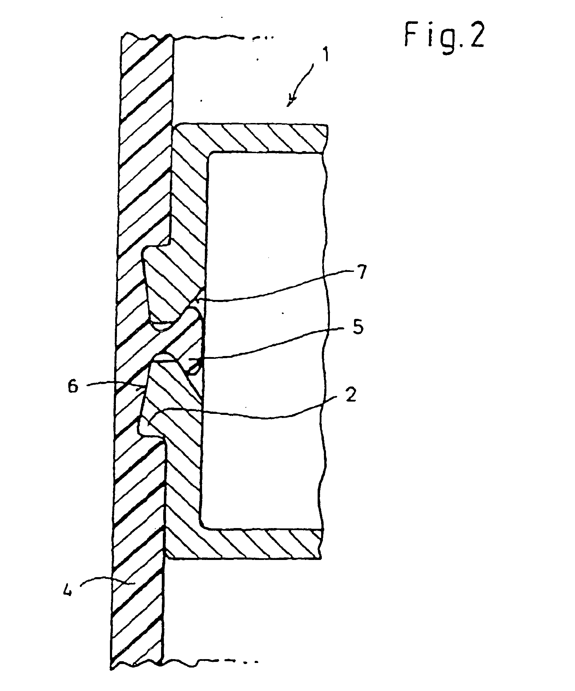

Wie in den Figuren 1 und 2 sehr vereinfacht dargestellt ist, besitzt das im Schnitt dargestellte Einbauteil 1 ein Fußelement 2 mit einer Durchtrittsöffnung 3.

Wie bereits vorstehend erwähnt, wird das erfindungsgemäße Verfahren nachfolgend beispielsweise anhand der Herstellung eines Kraftstoffbehälters aus Kunststoff erläutert. Die Erfindung ist jedoch so zu verstehen, dass jedweder Hohlkörper hergestellt werden kann. Die Verbindung kann sowohl innerhalb als auch außerhalb des Hohlkörpers realisiert werden. Im vorliegenden Fall ist das Einbauteil 1 als Schwalltopf eines Kraftstoffbehälters ausgebildet.

Das in Figur 1 dargestellte Einbauteil 1 wird mit seinem Fußelement 2 gegen die Wandung 4 des herzustellenden Hohlkörpers gedrückt, und zwar wenn das Kunststoffmaterial der Wandung 4 sich noch oder wieder im plastischen Zustand befindet. Bei dem nachstehend beschriebenen Herstellungsverfahren erfolgt die Verbindung in der ersten Hitze bei der Herstellung des Hohlkörpers, so dass das Material der Wandung 4 sich noch im schmelzflüssigen Zustand befindet und bei Ausübung von hinreichendem Druck auf das Fußelement 2 in Richtung des in Figur 1 rechts dargestellten Pfeiles den in Figur 2 gezeigtem Kopf 5 ausbildet, der die Durchtrittsöffnung 3 des Einbauteils 1 hintergreift. Die Durchtrittsöffnung 3 ist vorzugsweise als kreisrunde Bohrung ausgebildet, die an ihrem der Wandung 4 abliegenden Ende hinterschnitten bzw. angefast ist.

Das Fußelement 2 hat zwecks Verbesserung des Fließverhaltens des plastischen Materials eine konkave Kontaktfläche 6, die zentral, d. h. an der tiefsten Stelle ihrer Muldung, von der Durchtrittsöffnung 3 durchsetzt wird. Diese Formgebung der Kontaktfläche 6 und des Fußelements 2, das in Bezug auf das Einbauteil 1 abgesetzt ist, begünstigt das Fließverhalten der Schmelze durch die Durchtrittsöffnung 3. Durch die stempelförmige, abgesetzte Ausbildung des Fußelements 2 wird bei gegebener Presskraft die Flächenpressung im Bereich der Kontaktfläche erhöht. Die konkave Ausbildung der Kontaktfläche in Verbindung mit der dort auftretenden erhöhten Flächenpressung bewirkt eine Führung der Schmelze in die Durchtrittsöffnung 3.

Die Durchtrittsöffnung 3 ist auf ihrer der Kontaktfläche 6 abgewandten Seite mit einer Hinterschneidung 7 versehen, die als Widerlager für den Kopf 5 dient. Letzterer bildet sich auch aus, wenn die Hinterschneidung 7 nicht vorhanden ist, dann ist es unter Umständen erforderlich, die Dicke des Fußelements 2 kleiner zu wählen.

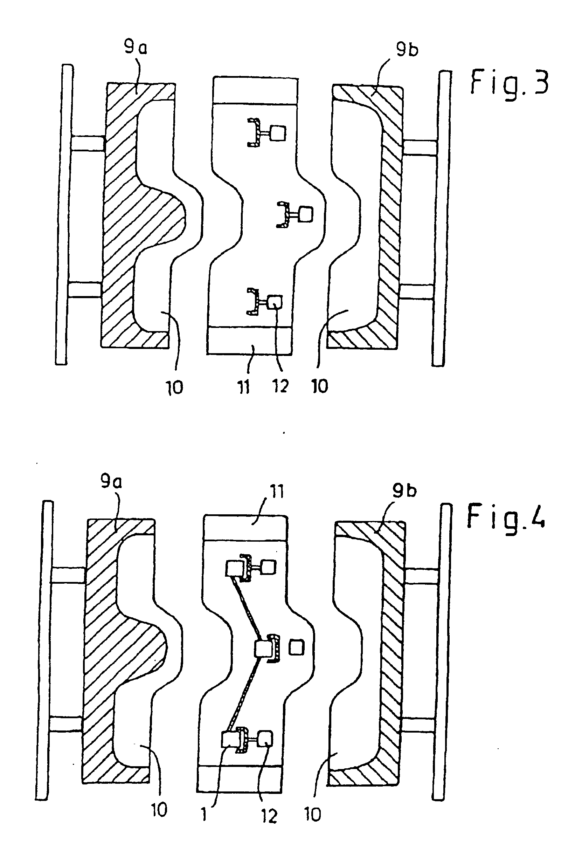

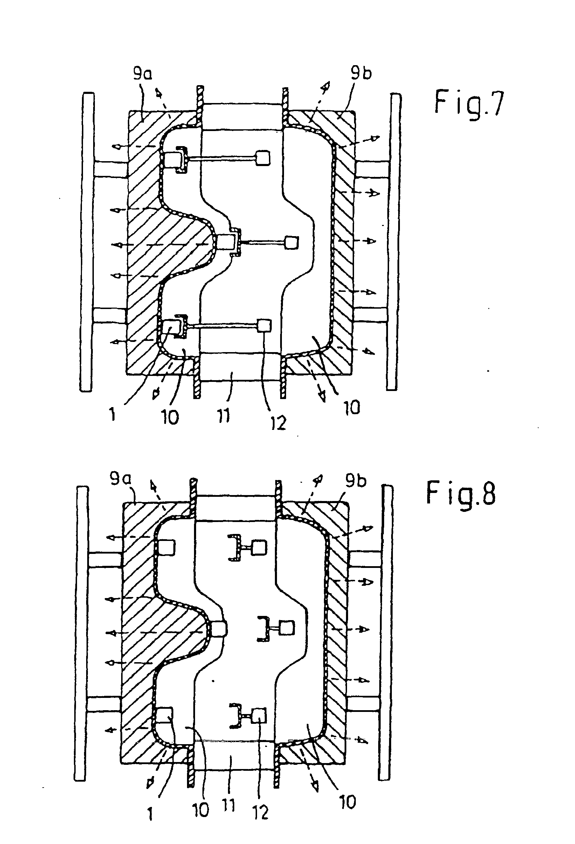

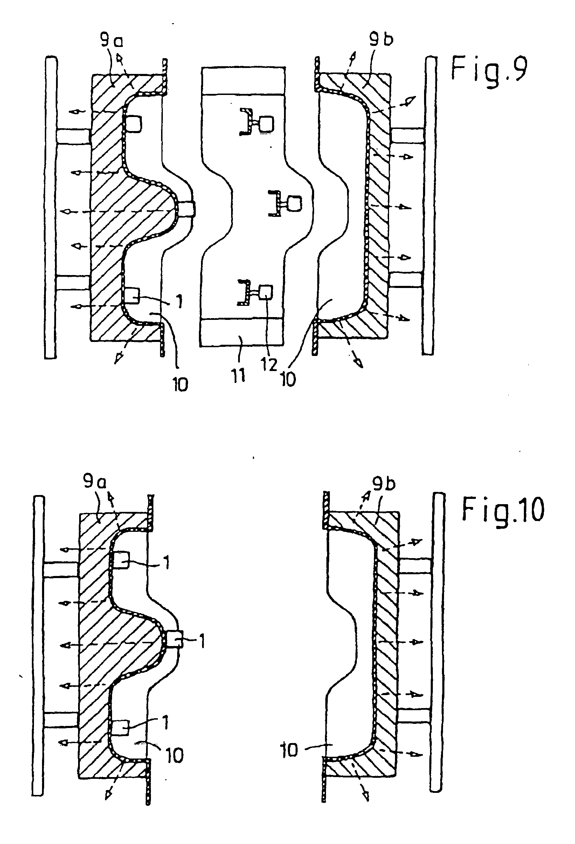

Wie bereits vorstehend erwähnt, ist das Verfahren gemäß der Erfindung in den Figuren 3 bis 12 schematisch dargestellt.

Das Verfahren gemäß der Erfindung umfasst die Herstellung des Artikels 8 als Kraftstoffbehälter durch Extrusionsblasformen.

Das Formwerkzeug umfasst zwei Formhälften 9a, 9b, die komplementär zueinander ausgebildet sind und im geschlossenen Zustand ein Formnest 10 begrenzen, das die äußere Gestaltung des fertigzustellenden Artikels 8 bestimmt. Zwischen den Formhälften 9a, 9b wird ein Einbauträger-Rahmen 11 platziert, der zwischen den Formhälften 9a, 9b verfahrbar angeordnet ist. Innerhalb des Einbauträger-Rahmens 11 sind Einbauteil-Halter 12 lageveränderbar angeordnet. Diese sind innerhalb des Einbauträger-Rahmens 11 hydraulisch oder pneumatisch in der Ebene des Einbauträger-Rahmens und quer hierzu verfahrbar bzw. verstellbar. Die Einbauteil-Halter 12 werden, wie dies in Figur 4 dargestellt ist, mit Einbauteilen 1 bestückt. Im vorliegenden Fall sind die Einbauteile 1 über eine nicht näherbezeichnete Leitung miteinander verbunden. Jede der Einbauteile hat in etwa die in den Figuren 1 und 2 dargestellte Konfiguration.

Nachdem der Einbauträger-Rahmen 11 zwischen den Formhälften 9a, 9b positioniert wurde, werden aus einem oder mehreren nicht dargestellten Extrusionsköpfen bahnförmige Vorformlinge 13 zwischen die geöffneten Formhälften 9a, 9b extrudiert. Es ist ebenso möglich, die Vorformlinge 13 nicht am Aufstellungsort des Werkzeugs sondern hiervon entfernt zu extrudieren und mit einer Handhabungsvorrichtung zwischen die geöffneten Formhälften 9a, 9b zu bringen.

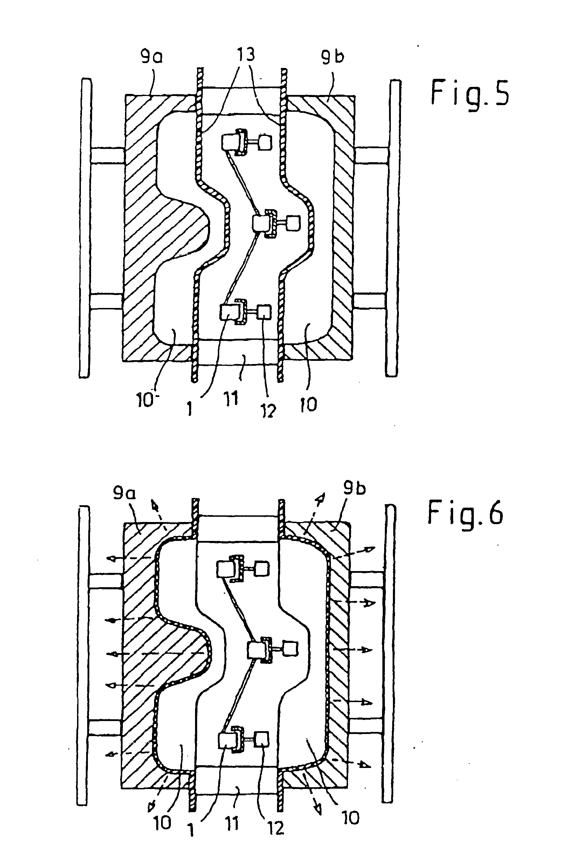

Die Vorformlinge 13 erstrecken sich in der in den Figuren 5 und 6 dargestellten Lage jeweils zwischen einer Formhälfte 9a, 9b und dem Einbauträger-Rahmen 11. In einem weiteren Verfahrensschritt werden die Vorformlinge mittels Unterdruck an die Kontur der Formhälften 9a, 9b im Formnest 11 angelegt. Dies kann mit dem Schließen der Formhälften 9a, 9b gegen den Einbauträger-Rahmen 11 oder auch bereits vorher erfolgen.

Mit Hilfe von Unterdruck oder auch Überdruck werden die Vorformlinge 13 vollständig an die Kontur des Formnestes 10 angelegt.

Sodann fahren die Einbauteil-Halter 12 aus der Rahmenebene hinaus und pressen die Einbauteile 1 gegen die Wandung 4 des Artikels 8 bzw. gegen die an dem Formnest 10 anliegenden Vorformlinge. Es kommt die zuvor beschriebene Verankerung der Einbauteile 1 mit der Wandung 4 des Artikels 8 zustande.

Sodann fahren die Einbauträger-Halter 12 in ihre Ausgangslage zurück. Die Formhälften werden auseinandergefahren, wobei die zuvor gebildeten Halbschalen des Artikels 8 im Formnest verbleiben. Der Einbauträger-Rahmen 11 wird zwischen den Formhälften 9a, 9b weggefahren, das Werkzeug schließt erneut und verschweißt die beiden Halbschalen des Artikels miteinander.

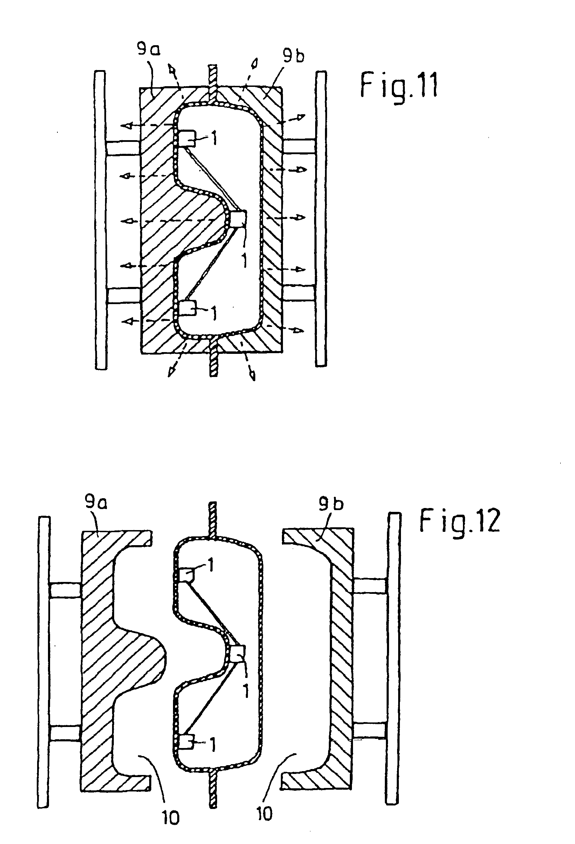

In den Figuren 11 und 12 ist das Ausformen und Entnehmen des fertigen Artikels 8 schematisch dargestellt.

### Bezugszeichenliste

- 1.: Einbauteil
- 2.: Fußelement
- 3.: Durchtrittsöffnung
- 4.: Wandung
- 5.: Kopf
- 6.: Kontaktfläche
- 7.: Hinterschneidung
- 8.: Artikel
- 9a, 9b: Formhälften
- 10.: Formnest
- 11.: Einbauträger-Rahmen
- 12.: Einbauteil-Halter
- 13.: Vorformlinge

## Patentansprüche

1. Kunststoff-Hohlkörper mit wenigstens einem Ein- oder Anbauteil (1), das bei der Herstellung des Hohlkörpers mit diesem verbunden wurde, wobei der Hohlkörper und das Ein- oder Anbauteil (1) formschlossig miteinander verbunden sind, derart, dass das Ein- oder Anbauteil (1) im Bereich einer Kontaktfläche (6) mit der Wandung (4) des Hohlkörpers wenigstens eine Durchtrittsöffnung (3) aufweist, die von dem Kunststoff der Wandung (4) des Hohlkörpers durchsetzt und hintergriffen wird, **dadurch gekennzeichnet, dass** das Ein- oder Anbauteil (1) wenigstens ein Fußelement (2) aufweist, welches eine abgesetzte oder abgestufte Kontaktfläche (6) mit der innenwandung (4) des Hohlkörpers bildet, dass die Kontaktfläche (6) eine an der der Wandung (4) zugewandten Selte des Ein- oder Anbauteils (1) konkav oder kortisch ausgebildete Muldung ist und dass die Durchtrittsöffnung (3) etwa die tiefste Stelle der Muldung bildet.

2. Kunststoff-Hohlkörper nach Anspruch 1, **dadurch gekennzeichnet, dass** die Durchtrittsöffnung (3) die Kontaktfläche (6) des Fußelements (2) durchsetzt.

3. Kunststoff-Hohlkörper nach Anspruch 1 oder 2, **dadurch gekennzeichnet, dass** die Durchtrittsöffnung (3) an ihrem der Wandung (4) des Hohlkörpers abgewandten Ende hinterschnitten ist.

## Claims

1. Plastic hollow body having at least one built-in or built-on part (1) which has been connected to said hollow body during the manufacture of the latter, wherein the hollow body and the built-in or built-on part (1) are connected to one another in a form-fitting manner in such a way that said built-in or built-on part (1) has, in the region of a face (6) which is in contact with the wall (4) of the hollow body, at least one pass-through aperture (3) which the plastic of the wall (4) of the hollow body passes through and engages behind, **characterised in that** the built-in or built-on part has at least one foot element (2) which forms an offset or stepped face (6) which is in contact with the inner wall (4) of the hollow body, that the contact face (6) is a depression of concave or conical construction on that side of the built-in or built-on part (1) which faces towards the wall (4), and that the pass-through aperture (3) forms approximately the deepest point in the depression.

2. Plastic hollow body according to claim 1, **characterised in that** the pass-through aperture (3) passes through the contact face (6) of the foot element (2).

3. Plastic hollow body according to one of claims 1 or 2, **characterised in that** the pass-through aperture (3) is undercut at its end that faces away from the wall (4) of the hollow body.

## Revendications

1. Corps creux en matière plastique, comportant au moins en élément intégré ou élément rapporté (1), qui au moment de la réalisation du corps creux est relié à celui-ci, le corps creux et l'élément intégré ou élément rapporté (1) étant reliés entre eux par conjugaison de forme, de telle sorte que l'élément intégré ou élément rapporté (1), dans la zone d'une surface de contact (6) avec la paroi (4) du corps creux, comporte au moins une ouverture de passage (3), par laquelle passe la matière plastique de la paroi (4) du corps creux et laquelle est enserrée par l'arrière par la matière plastique, **caractérisé en ce que** l'élément intégré ou élément rapporté comporte au moins un élément inférieur (2) qui forme une zone de contact (6), décalé ou étagé, ave la paroi intérieure (4) du corps creux, **en ce que** la surface de contact (6) est en creux concave ou conique réalisé sur le côté de l'élément intégré ou élément rapporté (1), orienté vers la paroi (4), et **en ce que** l'ouverture de passage (3) forme sensiblement la zone la plus profonde du creux.

2. Corps creux en matière plastique selon la revendication 1, **caractérisé en ce que** l'ouverture de passage (3) traverse la surface de contact (6) de l'élément inférieur (2).

3. Corps creux en matière plastique selon l'une quelconque des revendications 1 ou 2, **caractérisé en ce que** l'ouverture de passage (3) est détalonnée au niveau de son extrémité opposée à la paroi (4) du corps creux.
